# EUROPÄISCHE PATENTSCHRIFT

(11) **EP 4 154 074 B1**
(45) Veröffentlichungstag und Bekanntmachung des Hinweises auf die Patenterteilung: **20.05.2026**
(21) Anmeldenummer: 20761521.2
(22) Anmeldetag: 04.08.2020
(51) Int. Cl.: G05B 19/418

(54) **VERFAHREN ZUM AUTOMATISIERTEN ERSTELLEN EINES SKILL-INTERFACES, COMPUTERPROGRAMMPRODUKT UND VORRICHTUNG**
METHOD FOR THE AUTOMATED CREATION OF A SKILL INTERFACE, COMPUTER PROGRAMME PRODUCT, AND DEVICE
PROCÉDÉ DE CRÉATION AUTOMATISÉE D'UNE INTERFACE DE COMPÉTENCE, PRODUIT PROGRAMME D'ORDINATEUR ET DISPOSITIF CORRESPONDANT

(43) Veröffentlichungstag der Anmeldung: 29.03.2023
(73) Patentinhaber: Siemens Aktiengesellschaft, 80333 München (DE)
(72) Erfinder: BÄR, Schirin, 90768 Fürth (DE); PESCHKE, Jörn, 90489 Nürnberg (DE)
(74) Vertreter: Siemens Patent Attorneys
(86) Internationale Anmeldenummer: PCT/EP2020/071932
(87) Internationale Veröffentlichungsnummer: WO 2022/028682

(56) Entgegenhaltungen:
- EP-A1- 3 470 735
- EP-A1- 3 582 125
- DOROFEEV KIRILL ET AL: "Skill-based Engineering Approach using OPC UA Programs", 2018 IEEE 16TH INTERNATIONAL CONFERENCE ON INDUSTRIAL INFORMATICS (INDIN), IEEE, 18 July 2018 (2018-07-18), pages 1098 - 1103, XP033407896, DOI: 10.1109/INDIN.2018.8471978
- KASPAR MANUEL ET AL: "Tool and Technology Independent Function Interfaces by Using a Generic OPC UA Representation", 2018 IEEE 23RD INTERNATIONAL CONFERENCE ON EMERGING TECHNOLOGIES AND FACTORY AUTOMATION (ETFA), IEEE, vol. 1, 4 September 2018 (2018-09-04), pages 1183 - 1186, XP033426155, DOI: 10.1109/ETFA.2018.8502647

## Beschreibung

OPC Unified Architecture (OPC UA) ist ein Standard für den Datenaustausch beispielsweise in einer industriellen Anlage als plattformunabhängige, service-orientierte Architektur (SOA). OPC UA wurde unter anderem in der Normenreihe IEC 62541 veröffentlicht.

OPC UA Informationsmodelle spielen dabei als einheitliche Schnittstelle für das Überwachen / Monitoring und die Ansteuerung von Maschinen und Anlagen insbesondere in der industriellen Fertigung eine zunehmend wichtige Rolle.

Die Basis für diese Informationsmodelle bilden häufig OPC UA Companion-Spezifikationen. Die "OPC UA Companion Specification für die Robotik" (kurz OPC UA Robotics) bietet beispielsweise ein standardisiertes Informationsmodell, das alle roboterbezogenen Daten unabhängig von Hersteller und Standort einheitlich darstellen kann. Anlagenverwaltung (Asset Management), Zustandsüberwachung, vorbeugende Wartung und vertikale Integration werden damit ermöglicht - zu jeder Zeit, überall auf der Welt und unabhängig von Hersteller und Robotertyp.

In verschiedene Spezifikationen (z. B. PackML - Packaging Machine Language) sind Zustandsmaschinen (State Machines) ein wichtiges Mittel, das Verhalten von Maschinen und Anlagen einheitlich abzubilden und zu steuern. In der Regel ist es heute möglich diese Modelle in einem OPC UA Server zu instanziieren, der direkt auf der Steuerung (SPS - Speicherprogrammierbare Steuerung, PLC oder SoftPLC - Programmable Logic Controler) läuft.

Um eine Ansteuerung der SPS durch ein externes System zu ermöglichen, muss also die Zustandsmaschine durch ein standardisiertes (OPC UA) Informationsmodell abgebildet werden, welches anschließend auf einem OPC UA Server platziert und einem OPC UA Client zugänglich gemacht wird. Der Client kann dann den aktuellen Zustand auslesen und über Methodenaufrufe Zustandswechsel anstoßen. Das Engineering dieses Informationsmodells, welches die Zustandsmaschine der Maschine bzw. Anlage abbildet, ist meist sehr aufwändig und wird in der Regel manuell durchgeführt, hier sind detaillierte Kenntnisse über die Modellierung der Zustandsmaschine im OPC UA Informationsmodell als auch über Funktionsweise des Zustandsmodells innerhalb des SPS Programm notwendig.

Während für neu zu-programmierende Systeme inzwischen bereits eine gewisse Unterstützung durch das Engineering möglich ist (z. B. durch automatische Erzeugung des Modells und Verschalten mit dem PLC-Code), stellt sich dabei die Situation für sogenannte "Brownfield"-Anlagen deutlich komplizierter dar.

Damit sind Anlagen gemeint, mit einem bestehenden Software- und Architekturkonzept, bei denen sich eine neu entwickelte Software in das bestehendes Software- und Architekturkonzept eingliedern muss. Im Gegensatz zur vollständigen Neuentwicklung (auch Greenfield-Entwicklung genannt) muss sich die Weiterentwicklung strukturellen Rahmenbedingungen beugen. Häufig ist die genaue Funktionsweise des Steuerungsprogramms nicht bekannt oder gar nicht zugänglich. Soll nun eine Zustandsmaschine (State Machine) umgesetzt werden, die das Verhalten abbildet, ist dies sehr aufwändig oder gar nicht möglich.

Neben Standards wie PackML sind auch Schnittstellen (Interfaces) zum Aufruf von Skills ein wichtiger Anwendungsfall. Unter einem sogenannten "Skill" versteht man dabei allgemein die Fähigkeit einer Ressource, bestimmte Funktionen auszuüben, also beispielsweise einen bestimmten Schritt eines Produktionsprozesses umzusetzen. Skills bestehen aus einem Skill Service (die Funktion) und dem Skill Interface (die zugehörige Schnittstelle). Skills können auch verwendet werden, um einen Produktionsprozess, beispielsweise ausgeführt an einer Automatisierungsanlage, zu beschreiben. Das Ziel ist, basierend auf den benötigten Fähigkeiten, die für jeden Schritt des Produktionsprozesses geeigneten Ressourcen anhand der Skills zu identifizieren, anstatt die tatsächlichen Produktionsressourcen benennen zu müssen. Die wirtschaftlich sinnvolle nachträgliche Umsetzung solcher Skills und insbesondere deren Interfaces bei bestehenden Anlagen ist, wie oben bereits beschrieben, heute aufgrund des hohen manuellen Aufwandes ein nicht gelöstes Problem.

Der derzeit einzige Weg zur nachträglichen Umsetzung von Skill-Interfaces ist ein manuelles Engineering und Erstellen des Informationsmodells mit Tools wie dem "UaModeler" oder "SiOME". Letzteres Tool biete zwar eingeschränkte Fähigkeiten zur automatischen Erstellung von Informationsmodellen aus PLC-Code, damit diese Funktion aber im betrachteten Anwendungsfall genutzt werden kann, müsste im PLC-Code das zu erstellende Modell bereits exakt in den gleichen Strukturen abgebildet sein. Dieser Fall ist bei einer Brownfield-Situation unrealistisch.

Dem Ersteller müsste also die gesamte Funktionsweise der Zustandsmaschine bekannt sein, damit er jeden Zustand und jede Transition mit Methodenaufrufen und Referenzen korrekt modelliert. Systeme, die das Verhalten einer Anlage analysieren, haben die Zielstellung, Modelle zu parametrieren, die die Anlage optimieren oder steuern sollen.

Es ist Aufgabe der Erfindung, das Verhalten von Zuständen und Transitionen in einem Informationsmodell als Skill-Interface automatisiert abzubilden.

Die Aufgabe wird gelöst durch ein Verfahren gemäß den Merkmalen des Patentanspruchs 1.

Die Aufgabe wird gelöst durch ein Computerprorammprodukt gemäß den Merkmalen des Patentanspruchs 7.

Die Aufgabe wird weiterhin gelöst durch eine Vorrichtung gemäß den Merkmalen des Patentanspruchs 13. Vorteilhafte Ausgestaltungen der Erfindung sind in den Unteransprüchen angegeben.

Das nachfolgend beschriebene Verfahren zielt darauf ab, automatisiert ein Informationsmodell für eine Brownfield Anlage bzw. Maschine zu erstellen, ohne dass der Anwender den Steuerungscode der beteiligten Controller im Detail kennt. Dieses Informationsmodell soll als Skill-Interface genutzt werden, um es beispielsweise einem OPC UA Client zu ermöglichen einheitlich die Zustände von Skills zu beobachten und ggf. die Ausführung von Skills zu triggern und Ergebnisrückmeldungen zu bekommen.

Die Erfindung ist in einer vorteilhaften Ausgestaltung weiterhin in den Figuren dargestellt, dabei zeigen die Figuren:
- Figur 1: Zustandsgraph und Separierung in Teilbäume,
- Figur 2: Verfahrensschritte ohne Überschneidung
- Figur 3: Differenzierung als Ergebnis der Einteilung
- Figur 4: Skill -State Machine und
- Figur 5: Machine-State-Machine mit zwei Skills.

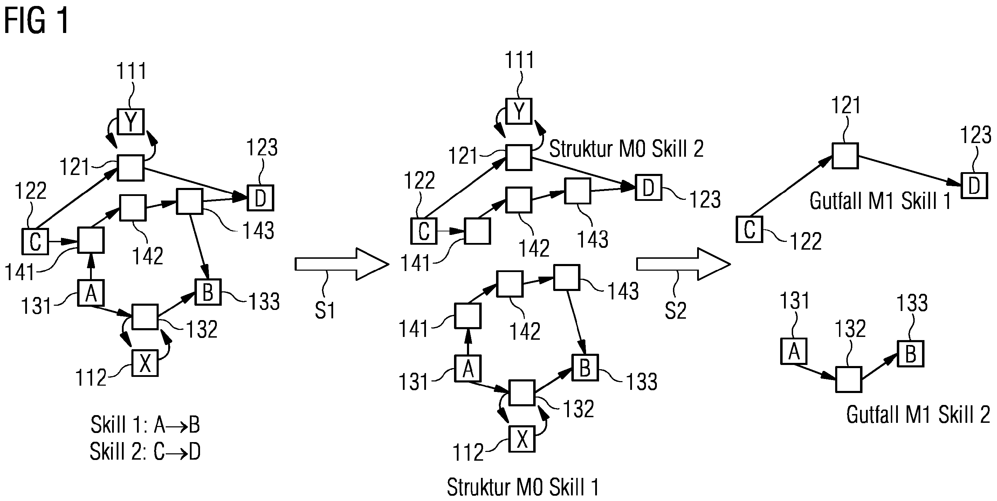

Die Figuren 1 bis 3 zeigen anhand eines sehr einfachen Zustandsgraphen die Separierung und Kennzeichnung von Teilbäumen.

### Phase 1: Erfassung der Zustände des Systems

Dazu werden zunächst alle Zustände, die das System einnehmen kann, durch Beobachten von zugänglichen Variablen erfasst.

Dies kann beispielsweise mittels des Verfahrens zum automatisierten Labeln von Signaturen mit Signalen aus Automatisierungssystemen geschehen, analog zu dem in EP 3579072 A beschriebenen Verfahren.

Dabei wird zunächst eine Quantisierung einer mit Bezug auf eine Anlage aufgenommenen Zustandszeitreihe angepasst, so dass alle von der Zustandszeitreihe umfassten Zustände zumindest eine Zustandsdauer oberhalb einer zuvor festgelegten Minimalzeit haben. Danach werden aufgrund von Zustandswechseln in zumindest einer Zustandszeitreihe Anlagenzustände ermittelt. Dabei werden die zwischen den Orten zweier aufeinanderfolgender Anlagezustände liegenden Abschnitte einer aufgenommenen, synchronen Datenzeitreihe ermittelt und diese mit einem Bezeichner versehen, welcher einen, eine Signatur bestimmenden Anlagenzustand angibt.

Danach werden ggf. die erhaltenen Zustandsmengen der gewünschten Granularität angepasst (d. h. die Anzahl der gewünschten Zustandsklassen), wie beispielsweise in der EP 3 579 073 A beschrieben, mittels eines Verfahrens zum automatischen Zusammenfassen (Aggregation) von Signaturen. Als Signaturen werden, wie oben beschrieben, Abschnitte in zumindest einer synchronen Datenzeitreihe zwischen zwei aufeinander folgenden Anlagenzuständen ermittelt, wobei eine Dauer jeder ermittelten Signatur mit einer Minimaldauer verglichen wird und wobei eine Signatur mit einer Dauer kleiner als die Minimaldauer nach einer definierten Regel mit einer benachbarten Signatur zusammengefasst wird.

Dann wird schließlich ein allgemeines Zustandsmodell abgeleitet. Dabei kann beispielsweise durch das Beobachten des Systemverhaltens ein Graph aufgebaut werden, mit Zuständen und Beziehungen zwischen den Zuständen. Anschließend wird durch geeignete Regeln der Graph in ein Informationsmodell übertragen. Zum Beispiel wird ein Zustand als Zustands-Objekt angelegt, ein Übergang als Transitions-Objekt, eine Beziehung zwischen Zuständen als Relation und eine Aktion, die eine bestimmte Reaktion auslöst, als Methode.

Dabei wird automatisch erkannt, ob es sich um einen Warte- oder Transitionszustand handelt. Auch übergeordnete Zustandsmaschinen werden erkannt und entsprechend modelliert.

Die Referenzen und Methoden werden ebenfalls im Informationsmodell modelliert.

Damit diese Schritte sinnvoll durchgeführt werden können, müssen die folgenden Vorrausetzungen gegeben sein:
Es muss auf die Variablen zugegriffen werden können, die den Zustand der Anlage/Maschine eindeutig charakterisieren.

Das ist bei den meisten Automatisierungssystemen in der Regel durch verschiedene Verfahren möglich, beispielsweise durch eine Analyse der Buskommunikation zwischen Steuerungen, der Kommunikation zu den Sensoren, der dezentraler Peripherie und den HMIs, oder Beobachten von Live-Variablenwerten direkt in Automatisierungsprogrammen, Steuerungsprojekten).

Um die Zustände des Systems korrekt zu erfassen müssen alle abzubildenden Zustände zumindest einmal durchlaufen werden.

Diese Vorrausetzung kann entweder erfüllt werden, in dem die gewünschten Zustände gezielt angesteuert werden, oder der Betrieb der Anlagen wird über einen ausreichend langen Zeitraum beobachtet. In diesem Fall kann es passieren, dass Situationen trotzdem nicht erfasst werden, sie können dann später detektiert und gesondert behandelt werden. Details dazu werden in Phase 3 des Verfahrens beschrieben.

Das Ergebnis von Phase 1 ist ein allgemeines Zustandsmodell, welches das Verhalten des Systems beschreibt, aber noch kein spezifischeres Verständnis der Situation oder ein gezieltes Ansteuern von Verhalten ermöglicht. Grundsätzliches Verhalten wie beispielsweise die Differenzierung zwischen Wartezuständen, Transitionen (instantane Übergänge), Übergangszustände und Strukturen (z. B. Sub-State Machines) sind hier bereits berücksichtigt.

### Phase 2: Differenzieren des Zustandsmodells

Ausgehend von dem in Phase 1 erstellen allgemeinen Zustandsmodell kann nun eine Differenzierung erfolgen.

Wenn zumindest für einen Produktionsschritt ein Skills Interface erzeugt werden soll, muss als nächstes festgelegt werden, für welche Produktionsschritt dies erfolgen soll. Dazu muss im Zustandsmodell der jeweilige Anfangszustand A, C und zugehörige Endzustand B, D des Produktionsschrittes und des zugehörigen gesuchten Skills angegeben werden.

Dies kann beispielsweise durch einfaches Identifizieren (Tagging) der Situation bei der Zustandserfassung in Phase 1 erfolgen. Der Start bzw. Aufruf von Produktionsfunktionen kann in einem System gut beobachtet werden (im Gegensatz zu internen Abläufen im PLC Programm), da es sich bei automatisierten Systemen um eine Kommunikation zwischen Produktions- und Anlagensteuerung handelt. Die Zeitpunkte des Starts eines Produktionsschrittes können durch Auswerten dieser Kommunikation erfolgen. Alternativ kann auch ein Anwender der das System nur von außen beobachtet den Zeitpunkt des Starts und Endes eines Produktionsschrittes angeben.

Dies ist in der Situation der Brownfield Analyse besonders vorteilhaft, denn der Anwender muss dazu kein genaueres Detailwissen haben, beispielsweise über eine Variablenbelegung.

Gibt es bereits eine (anderweitige) automatische Ansteuerung der Funktionen, kann diese Kommunikation ebenfalls zum Tagging benutzt werden.

Zusätzlich können dabei bereits normale Durchläufe (d. h. erfolgreiche Produktionsschritte ohne Fehler) markiert werden. Handelt es sich um eine Produktionsanlage, in der die erfolgreiche Ausführung von Produktionsschritten der Normalfall ist, (dies dürfte für die allermeisten Anlagen zutreffen), kann dies automatisiert erfolgen, indem die häufigsten Abfolgen ausgewählt werden. Im Gegensatz dazu treten Fehler bzw. Anomalien selten auf.

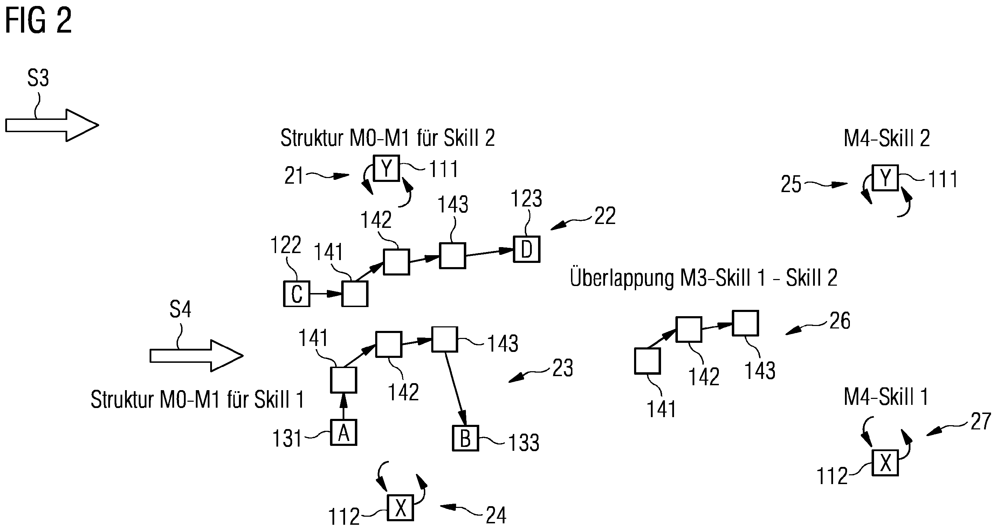

Ausgehend von einem so ermittelten Modell mit eindeutigen Identifikatoren für jeden Zustand (d. h. jeder Zustand ist in Bezug auf das Maschinen-/Anlagenverhalten eindeutig) und gekennzeichneten Start- und Endzuständen für jeden Skill wird der folgende Algorithmus ausgeführt. Dieses Vorgehen ist in den Figuren 1 und 2 weiterhin beispielhaft dargestellt. In dem Graph werden zwei Skills umgesetzt, Skill 1 wird durch einen Weg von Knoten A, 131 zu Knoten B, 133 dargestellt. Skill 2 ist durch den Weg zwischen Knoten C, 122 und Knoten D, 123 repräsentiert. Die Knoten X, 112 und Y, 111, stellen dabei skillspezifische Fehler dar.

Gezeigt ist ein Zustandsgraph mit verschiedenen Zuständen 111, ... 143, welche zu einem Graph miteinander verbunden sind.

Schritt 1: Herausschneiden aller Wege die, ausgehend vom Startpunkt des Produktionsschrittes, zu einem Abschluss des Produktionsschrittes führen können (ggf. mit auch Fehlermeldung oder Unterbrechung) 12, Struktur M0 Skill2, 13, Struktur M0 Skill1.

Der so erhaltene Ausschnitt des Zustandsmodells umfasst: den gewünschten Funktionsablauf, d. h. den eigentlichen Skill, das ist der Weg von Knoten A zu Knoten B über die Knoten 122, 121, 123.

Weiterhin gibt es Knoten, die ein sogenanntes allgemeines Maschinenverhalten repräsentieren, also Verfahrensschritte, die mehreren Skills zugehörig sein können, in dem vorgestellten Beispiel sind das die Knoten 141, 142, 143.

Darüber hinaus gibt es dem Skill zugehörige spezielle Fehlerfälle X, 112, Y, 111 und gegebenenfalls auch weitere, in dem vorliegenden Beispiel nicht näher dargestellte allgemeine Fehlerfälle.

Schritt 2 führt dann zu einer Abbildung mit Einzelgraphen wie in 14, Gutfall M1 Skill1, 15, Gutfall M1 Skill2, gezeigt, die jeweils Teilgraphen des Ursprungsgraphen darstellen. Durch das Extrahieren von Abfolgen von Zuständen aus den in Schritt 1 gefundenen Zustandsmengen, die den "Gutfall", also die normale Ausführung des Skills, beschreiben, werden diese Teilgraphen erzeugt, die die normale Abfolge bzw. alle möglichen Abfolgen der Einzelschritte des gesuchten Produktionsschritts vom Start A, C zum Ziel B, D umfassen.

Welche Zustände zu dieser normalen Abfolge gehören, kann dabei auf verschiedene Arten ermittelt werden. Es kann entweder bereits in Phase 1 bei der Auswahl der Skills ermittelt werden. Alternativ dazu kann nochmals gezielt ein Ablauf für jede in Schritt 1 gefundene Teil-Menge ausgelöst und beobachtet werden.

Alle Zustände, die durchlaufen wurden, gehören nun zum "Gutfall" des Skill Durchlaufes und werden in den Teilgraphen 12, 13 aufgenommen.

Ist diese Abbildung für mehrere Produktionsschritte / Skills erforderlich, so werden Schritte 1 und 2 für jeden gewünschten Skill wiederholt.

Schritt 3: alle bisher gefundenen Strukturen, die "Gutfälle" repräsentieren, werden nun miteinander verglichen.

Wenn dabei Übereinstimmungen gefunden werden, werden diese Abfolgen bzw. Zustände als gemeinsam genutzte Funktionalität zwischen verschiedenen Skills markiert. (M2-Skill n-Skill m) In dem in den Figuren dargestellten Beispiel handelt es sich um die Knoten 141, 142, 143 (und die zugehörigen Verbindungen dazwischen).

Finden sich zwischen Skills dagegen keine gemeinsamen Strukturen, sind diese funktional unabhängig.

Schritt 4: Danach werden die in Schritt 3 bestimmten "Gutfälle" von den einzelnen Skillstrukturen Zustandsgraphen abgezogen, also die gefundenen Teilzustandsgraphen 14, 15 von dem Gesamt-Graph 11, und es erfolgt erneut ein Vergleich aller so erhaltenen Zustandsmengen. In dem dargestellten Beispiel verbleiben 4 Teilgraphen 21, 22, 23, 24.

Wenn dabei Übereinstimmungen gefunden werden, werden diese Bereiche als allgemeines Maschinenverhalten oder allgemeine Fehlerfälle gekennzeichnet. Hierbei handelt es sich wieder um die Knoten 141, 142, 143, so wie bei dem in Figur 1 bereits beschriebenen Fall.

Die Bereiche, für die keine Übereinstimmungen gefunden werden, sind beispielsweise Skill-spezifische Fehlerfälle X, Y oder Skill-spezifisches Maschinenverhalten (z. B. Setup-Routinen) M4-Skill n.

Das Ergebnis der Bildung von Teilmengen und Kennzeichnung der Zustände in Phase 2 wird nun genutzt, um das gesuchte Informationsmodell aufzubauen.

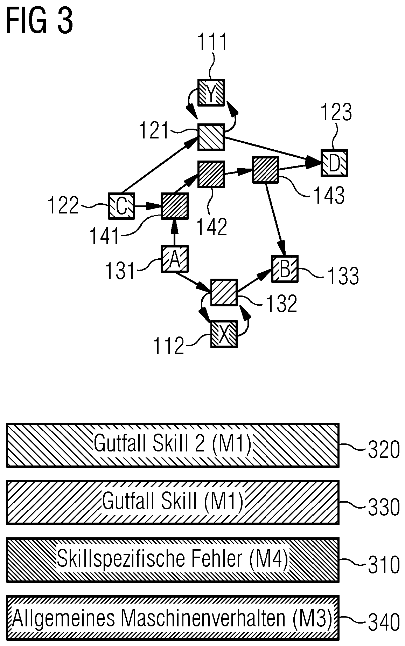

Figur 3 zeigt nun noch einmal den Ausgangsgraphen, nun aber mit entsprechend markierten Zuständen. Es finden sich die beiden Zustandsabläufe 121, 122, 123 und 131, 132, 133 für die beiden gesuchten Skills mit den Anfangs- und Endzuständen A-B respektive C-D. Es findet sich das allgemeine Maschinenveralten 141, 142, 143, welches von beiden Skills gemeinsam genutzt werden kann. Und es finden sich (Skill-spezifische) Fehlerroutinen 111, 112. So sind alle ermittelten Zustände des Zustandsgraphen eindeutig einer der vier Kategorien zugeordnet.

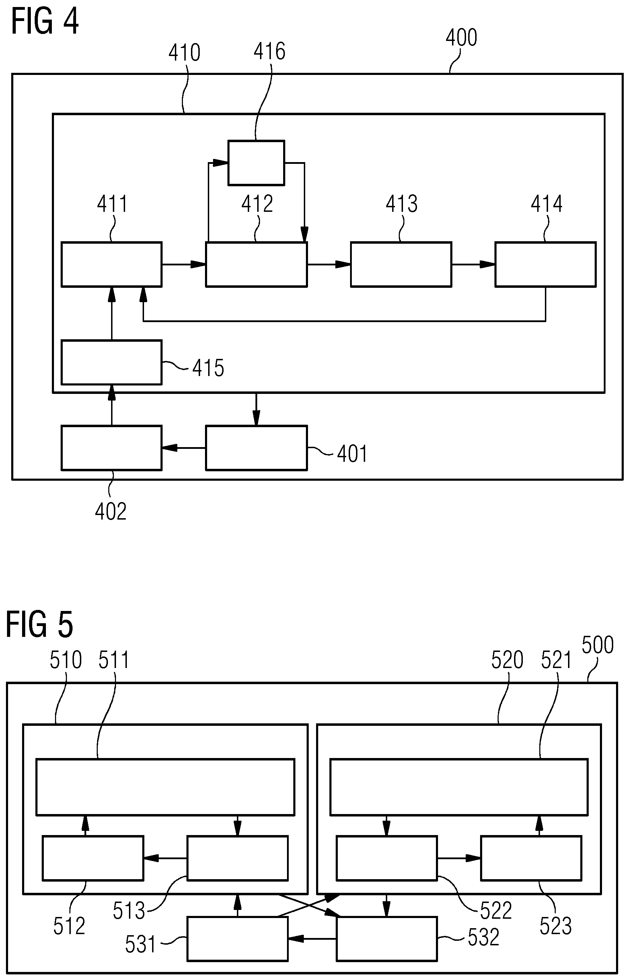

Figur 4 zeigt ein typisches vereinfachtes Zustandsmodell für einen beispielhaften Skill und Figur 5 die Einbettung von zumindest zwei Skills in ein Maschinen-Zustandsmodell. Auf dieses lassen sich die gefundenen Zustände mit den nachfolgend beschrieben Regeln abbilden. Dabei können entweder alle Zustände auf einer Ebene dargestellt und die "Standardzustände" (wie in Figur 4) besonders markiert werden oder Unterzustandsmaschinen gebildet werden, welche die zusätzlichen feingranularen Zustände enthalten, falls mehrere gefundene Zustände einem Skill-Zustand entsprechen.

Für jeden Skill 400 gibt es dabei einen definierten Ablauf des Aufrufs (M1-Skilln) sowie spezifische Fehler bzw. Unterbrechungsabläufe (M4-Skill n dargestellt in Phase 2 der Figur 2, die Zustände X und Y, 111, 112).

In Figur 4 sind die Zustände des Gutfalls generisch in dem Kasten 410 dargestellt. Ausgehend von einem Leerlauf-Zustand Idle, 11, geht der gewünschte Skill 400 in einen Ausführungszustand Execute, 412. In dem Beispiel des Roboters könnte dieser beginnen, ein Werkstück zu bearbeiten.

Wenn dies benötigt wird, kann die Ausführung zwischendurch unterbrochen werden durch das Anhalten Hold, 416. Dies kann beispielsweise notwendig sein, wenn die Bearbeitung unterbrochen werden muss, weil das Bearbeitungswerkzeug ausgetauscht werden muss oder auch eine Unterbrechung aus anderem Grund vorliegt. Sobald der Vorgang fertig gestellt ist, also das Werkstück beispielsweise fertig bearbeitet ist, dann kann zum Beispiel in einem Zustand Completing, 413, das Werkstück aus der Halterung entfernt werden, um dann in einem Zustand Complete, 414, wieder über einen Ruhezustand in den Anfangszustand Idle, 411 über zu gehen, um mit der Bearbeitung eines weiteren Werkstücks fortzufahren. Sobald es bei dem Skill zu einem Fehler kommt, wird ein Skillspezifischer Fehlerzustand 401, 402 eingenommen, über den mittels eines Zurücksetzens der Anlage, Reset, 415, der normale Bearbeitungsprozeß wieder aufgenommen werden kann.

Allgemeines Maschinenverhalten und allgemeine Fehlerroutinen bilden den Rahmen für die Anteile der Skill-Aufrufe (M3). Damit wird auch unterscheidbar, wann ein Skill ausgeführt wird bzw. aufgerufen werden kann und wann nicht.

In der Figur 5 werden in einer Machine-State Machine 500 zwei Skills 510, 520 parallel ausgeführt. Die Zustandsabläufe der Skills sind dabei vereinfacht aber analog zu dem in Figur 4 dargestellten Fall 410. Die Figur zeigt dabei aber weiterhin zwei Zustände 531, 532, welche von beiden Skills gemeinsam genutzt sind und daher das sogenannte allgemeine Maschinenverhalten repräsentieren.

Für den Aufruf von Skills wird eine Methode angelegt, die den Übergang aus dem Startzustand in nachfolgende Übergänge triggert. Gibt es mehrere Nachfolgezustände, werden die dort unterschiedlichen Variablen des Zustandes als Parameter diesem Aufruf hinzugefügt, d.h. das System stellt Unterschiede fest und legt die Methode mit Eingangsvariable automatisch an.

Die Aufrufe von Skills Skill 1, Skill 2, die gemeinsam genutzte Abläufe haben (M2), werden gegeneinander verriegelt. Gibt es zum Beispiel eine gemeinsame Struktur M2-Skill 1 - Skill 2, können Skill 1 und 2 nicht parallel ausgeführt werden.

Skills, die keine gemeinsamen Strukturen haben, sind dagegen algorithmisch unabhängig.

Schließlich wird noch ein gesonderter Ausnahmezustand eingeführt, den das System einnimmt, wenn eine bisher unbekannte Variablenkombination auftritt. Dies zeigt an, dass der Zustand entweder neu ist oder in Phase 1 nicht erfasst wurde. In beiden Fällen kann der Nutzer entscheiden, ob das Verfahren mit diesem zusätzlichen Zustand erneut durchlaufen werden soll, um ihn mit in die Lösung aufzunehmen.

So ist es möglich, automatisiert ein Informationsmodell zur Beobachtung des Verhaltens und Aufruf von Skills zu erzeugen und mit der Steuerung der Maschine zu verschalten, ohne dass der Anwender das Steuerungsprogramm im Detail kennen oder verstehen muss. Für die Verschaltung des Triggerns von Skills ist dabei ggf. ein zusätzlicher Abgleich mit bereits bestehenden Aufrufmechanismen für die entsprechende Funktion sinnvoll. Die Methode auf Seitens des Informationsmodells wird dabei mit dem entsprechenden "Methoden"-Funktionsbaustein im SPS Programm verschaltet, d. h. welcher Methoden-Funktionsbaustein auf seitens der industriellen Steuerung aufgerufen werden soll, wenn diese Methode aufgerufen wird.

Das oben beschriebene Verfahren ermöglicht das automatische Abbilden des Verhaltens bzw. eines daraus abgeleiteten Zustandsmodells in ein einheitliches OPC UA Informationsmodell. Gegenüber einer manuellen Erstellung ergeben sich dabei zusammengefasst einige Vorteile.

Ein automatisiertes Verschalten des Informationsmodells mit den Steuerungsvariablen wird ermöglicht.

Die Datenkonsistenz zwischen dem Informationsmodell und den Steuerungsvariablen (insbesondere bei Änderungen) ist sichergestellt. Das vorgeschlagene Verfahren kann mehrfach zu verschiedenen Zeitpunkten ohne größeren Aufwand über die vorhandenen Daten angewendet werden.

Es entsteht für den Anwender kein zusätzlicher Engineering Aufwand, durch automatisierte Generierung des Informationsmodells. Kein überdurchschnittliches Wissen über die Anlage und die enthaltenen Skills ist erforderlich.

Es besteht auch nicht die Notwendigkeit, die Semantik des Steuerungscodes zu verstehen.

Der Steuerungscode muss für die Anwendung des Verfahrens nicht analysiert werden, was zeitaufwändig und fehleranfällig wäre.

Das Verfahren ist Steuerungshersteller- und programmiersprachenunabhängig, auch durch die Verwendung von standardisierten Methoden für Zustandswechsel von Wartezuständen. Die Unterscheidung von Warte- und Transitionszuständen erfolgt automatisiert und regelbasiert.

Dem Nutzer wird automatisiert ein Informationsmodell mit Zustandsgraphen für die einzelnen Skills und allgemeines Maschinenverhalten bzw. Fehlerfälle erstellt. Dies senkt den Engineeringaufwand für die nachträgliche Umsetzung von Skill-Interfaces drastisch und würde in vielen Fällen überhaupt erst eine wirtschaftlich sinnvolle Umsetzung ermöglichen (in einigen Fällen wäre sonst eine komplette oder weitgehende Neuimplementierung der Automatisierungsfunktionen notwendig).

## Patentansprüche

1. Verfahren zum automatisierten Erstellen eines Skill-Interfaces für einen Skill oder Produktionsschritt durchgeführt in einem System,
wobei man unter einem Skill die Fähigkeit einer Ressource versteht, Funktionen auszuüben,
mit folgenden Schritten:
- Erfassen aller Zustände (111, **...** 143) des Systems während der Ausführung des Skills,
- Erstellen eines allgemeinen Zustandsmodells bestehend aus den erfassten Zuständen und Beziehungen zwischen den Zuständen,
- Übertragen des Zustandsmodells in ein Informationsmodell,
- Festlegen eines Anfangszustands (A, C) und Endzustands (B, D) des Produktionsschrittes innerhalb des Zustandsmodells,
- Ermitteln aller Abfolgen von Zuständen (121, 122, 123, 131, 132, 133, 141, 142, 143) vom Anfangszustand zum Endzustand des gesuchten Skills,
- Separieren aller Abfolgen von Verfahrensschritten (141, 142, 143), die auch weiteren Skills zugehörig sein können,
- Separieren von Zuständen zur Fehlerbehandlung des Skills (111, 112) und
- Verschalten des Informationsmodells mit der Steuerung des Systems.

2. Verfahren gemäß Patentanspruch 1,
**dadurch gekennzeichnet, dass**
zum Erfassen der abzubildenden Zustände (111, **...** 143) jeder Zustand zumindest einmal gezielt angesteuert und durchlaufen werden muss.

3. Verfahren gemäß Patentanspruch 1 oder 2,
**dadurch gekennzeichnet, dass**
zum Erfassen der abzubildenden Zustände (111, **...** 143) das System über einen Zeitraum beobachtet wird, in dem jeder Zustand zumindest einmal durchlaufen wurde.

4. Verfahren gemäß einem der vorherigen Patentansprüche,
**dadurch gekennzeichnet, dass**
zumindest zwei Skills / Produktionsschritte innerhalb des Zustandsmodells identifiziert werden sollen, wobei die Abfolge von Verfahrensschritten (141, 142, 143) eines ersten Skills die auch weiteren Skills zugehörig sein könnte, durch Vergleich von Übereinstimmungen in den ermittelten Zustandsgraphen des ersten Skills (12) mit dem ermittelten Abfolgezustandsgraph des zweiten Skills (13) erfolgt, und die so ermittelten Zustandsabfolge markiert und aus beiden Zustandsgraphen entfernt wird.

5. Verfahren gemäß einem der vorherigen Patentansprüche,
**dadurch gekennzeichnet, dass**
der Anfangs- und Endzustand des Produktionsschrittes ermittelt werden durch gezieltes Durchlaufen des Skills und Identifizieren der Zustände.

6. Verfahren gemäß einem der vorherigen Patentansprüche,
**dadurch gekennzeichnet, dass**
das Informationsmodell gemäß dem Standard OPC-UA gebildet wird.

7. Computerprogrammprodukt zur Durchführung des Verfahrens zum automatisierten Erstellen eines Skill-Interfaces für einen Skill oder Produktionsschritt durchgeführt in einem System gemäß Patentanspruch 1,
mit folgenden automatisiert durchgeführten Schritten:
- Erfassen aller Zustände (111, **...** 143) des Systems während der Ausführung des Skills,
- Erstellen eines allgemeinen Zustandsmodells bestehend aus den erfassten Zuständen und Beziehungen zwischen den Zuständen,
- Übertragen des Zustandsmodells in ein Informationsmodell,
- Festlegen eines Anfangszustands (A, C) und Endzustands (B, D) des Produktionsschrittes innerhalb des Zustandsmodells,
- Ermitteln aller Abfolgen von Zuständen (121, 122, 123, 131, 132, 133, 141, 142, 143) vom Anfangszustand zum Endzustand des gesuchten Skills,
- Entfernen aller Abfolgen von Verfahrensschritten (141, 142, 143), die auch weiteren Skills zugehörig sein können,
- Entfernen von Zuständen zur Fehlerbehandlung des Skills (111, 112) und
- Verschalten des Informationsmodells mit der Steuerung des Automatisierungs-Systems.

8. Computerprogrammprodukt gemäß Patentanspruch 7,
**dadurch gekennzeichnet, dass**
zum Erfassen der abzubildenden Zustände (111, ... 143) jeder Zustand zumindest einmal gezielt angesteuert und durchlaufen werden muss.

9. Computerprogrammprodukt gemäß Patentanspruch 7 oder 8,
**dadurch gekennzeichnet, dass**
zum Erfassen der abzubildenden Zustände (111, ... 143) das System über einen Zeitraum beobachtet wird, in dem jeder Zustand zumindest einmal durchlaufen wurde.

10. Computerprogrammprodukt gemäß einem der vorherigen Patentansprüche 7 bis 9,
**dadurch gekennzeichnet, dass**
zumindest zwei Skills / Produktionsschritte innerhalb des Zustandsmodells identifiziert werden sollen, wobei die Abfolge von Verfahrensschritten (141, 142, 143) eines ersten Skills die auch weiteren Skills zugehörig sein könnte, durch Vergleich von Übereinstimmungen in den ermittelten Zustandsgraphen des ersten Skills (12) mit dem ermittelten Abfolgezustandsgraph des zweiten Skills (13) erfolgt, und die so ermittelten Zustandsabfolge markiert und aus beiden Zustandsgraphen entfernt wird.

11. Computerprogrammprodukt gemäß einem der vorherigen Patentansprüche 7 bis 10,
**dadurch gekennzeichnet, dass**
der Anfangs- und Endzustand des Produktionsschrittes ermittelt werden durch gezieltes Durchlaufen des Skills und Identifizieren der Zustände.

12. Computerprogrammprodukt gemäß einem der vorherigen Patentansprüche 7 bis 11,
**dadurch gekennzeichnet, dass**
das Informationsmodell gemäß dem Standard OPC-UA gebildet wird.

13. Vorrichtung eingerichtet zur Durchführung des Verfahrens mit den Merkmalen gemäß eines der Patentansprüche 1 bis 6.

## Claims

1. Method for the automated creation of a skill interface for a skill or production step carried out in a system,
where a skill is understood as meaning the ability of a resource to perform functions,
having the following steps:
- detecting all states (111, ...143) of the system during the execution of the skill,
- creating a general state model consisting of the detected states and relationships between the states,
- transferring the state model into an information model,
- defining a start state (A, C) and end state (B, D) of the production step within the state model,
- determining all sequences of states (121, 122, 123, 131, 132, 133, 141, 142, 143) from the start state to the end state of the required skill,
- separating all sequences of method steps (141, 142, 143) which can also be associated with further skills,
- separating states for error handling of the skill (111, 112), and
- interconnecting the information model with the control of the system.

2. Method according to Patent Claim 1,
**characterized in that**
each state must be activated and passed through at least once in a targeted manner in order to detect the states (111, ... 143) which are to be replicated.

3. Method according to Patent Claim 1 or 2,
**characterized in that**
the system is observed over a time period in which each state has been passed through at least once in order to detect the states (111, ... 143) which are to be replicated.

4. Method according to one of the preceding patent claims,
**characterized in that**
at least two skills/production steps are intended to be identified within the state model, wherein
the sequence of method steps (141, 142, 143) of a first skill which could also be associated with further skills is performed by comparing matches in the determined state graphs of the first skill (12) with the determined sequence state graph of the second skill (13), and the state sequence determined in this way is marked and removed from both state graphs.

5. Method according to one of the preceding patent claims,
**characterized in that**
the start state and end state of the production step are determined by passing through the skill and identifying the states in a targeted manner.

6. Method according to one of the preceding patent claims,
**characterized in that**
the information model is formed according to the OPC-UA standard.

7. Computer program product for carrying out the method for the automated creation of a skill interface for a skill or production step carried out in a system according to Patent Claim 1,
having the following steps carried out in an automated manner:
- detecting all states (111, ...143) of the system during the execution of the skill,
- creating a general state model consisting of the detected states and relationships between the states,
- transferring the state model into an information model, -
defining a start state (A, C) and end state (B, D) of the production step within the state model,
- determining all sequences of states (121, 122, 123, 131, 132, 133, 141, 142, 143) from the start state to the end state of the required skill,
- removing all sequences of method steps (141, 142, 143) which can also be associated with further skills,
- removing states for error handling of the skill (111, 112), and
- interconnecting the information model with the control of the automation system.

8. Computer program product according to Patent Claim 7,
**characterized in that**
each state must be activated and passed through at least once in a targeted manner in order to detect the states (111, ... 143) which are to be replicated.

9. Computer program product according to Patent Claim 7 or 8, **characterized in that**
the system is observed over a time period in which each state has been passed through at least once in order to detect the states (111, ... 143) which are to be replicated.

10. Computer program product according to one of the preceding Patent Claims 7 to 9,
**characterized in that**
at least two skills/production steps are intended to be identified within the state model, wherein
the sequence of method steps (141, 142, 143) of a first skill which could also be associated with further skills is performed by comparing matches in the determined state graphs of the first skill (12) with the determined sequence state graph of the second skill (13), and the state sequence determined in this way is marked and removed from both state graphs.

11. Computer program product according to one of the preceding Patent Claims 7 to 10,
**characterized in that**
the start state and end state of the production step are determined by passing through the skill and identifying the states in a targeted manner.

12. Computer program product according to one of the preceding Patent Claims 7 to 11,
**characterized in that**
the information model is formed according to the OPC-UA standard.

13. Device configured to carry out the method having the features according to one of Patent Claims 1 to 6.

## Revendications

1. Procédé destiné à la création automatisée d'une interface de compétence pour une compétence ou une étape de production mise en œuvre dans un système, dans lequel on entend par compétence la capacité d'une ressource à exercer des fonctions,
avec les étapes suivantes :
- détection de tous les états (111, ... 143) du système pendant l'exécution de la compétence,
- création d'un modèle d'état général se composant des états détectés et des relations entre les états,
- transfert du modèle d'état dans un modèle d'information,
- définition d'un état initial (A, C) et d'un état final (B, D) de l'étape de production au sein du modèle d'état,
- détermination de toutes les séquences d'états (121, 122, 123, 131, 132, 133, 141, 142, 143) d'un état initial à un état final de la compétence recherchée,
- séparation de toutes les séquences d'étapes de procédé (141, 142, 143) qui peuvent également appartenir à d'autres compétences,
- séparation d'états destinés à un traitement d'erreurs de la compétence (111, 112) et
- interconnexion du modèle d'information avec la commande du système.

2. Procédé selon la revendication 1,
**caractérisé en ce que**
pour la détection des états à représenter (111, ... 143) chaque état doit être commandé et parcouru de manière ciblée au moins une fois.

3. Procédé selon la revendication 1 ou 2,
**caractérisé en ce que**
pour la détection des états à représenter (111, ... 143) le système est observé pendant une période au cours de laquelle chaque état a été parcouru au moins une fois.

4. Procédé selon l'une quelconque des revendications précédentes, **caractérisé en ce que**
au moins deux compétences/étapes de production doivent être identifiées au sein du modèle d'état, dans lequel la séquence d'étapes de procédé (141, 142, 143) d'une première compétence qui pourrait également appartenir à d'autres compétences est mise en œuvre par le biais d'une comparaison de concordances dans les graphiques d'état déterminés de la première compétence (12) avec le graphique d'état de séquence déterminé de la seconde compétence (13) et la séquence d'états ainsi déterminée est marquée et éliminée des deux graphiques d'état.

5. Procédé selon l'une quelconque des revendications précédentes, **caractérisé en ce que**
l'état initial et l'état final de l'étape de production sont déterminés par le biais d'un parcours ciblé de la compétence et d'une identification des états.

6. Procédé selon l'une quelconque des revendications précédentes, **caractérisé en ce que**
le modèle d'information est formé selon la norme OPC-UA.

7. Produit de programme informatique destiné à la mise en œuvre du procédé destiné à la création automatisée d'une interface de compétence pour une compétence ou une étape de production mise en œuvre dans un système selon la revendication 1,
avec les étapes suivantes mises en œuvre de manière automatisée :
- détection de tous les états (111, ... 143) du système pendant l'exécution de la compétence,
- création d'un modèle d'état général se composant des états détectés et des relations entre les états,
- transfert du modèle d'état dans un modèle d'information,
- définition d'un état initial (A, C) et d'un état final (B, D) de l'étape de production au sein du modèle d'état,
- détermination de toutes les séquences d'états (121, 122, 123, 131, 132, 133, 141, 142, 143) d'un état initial à un état final de la compétence recherchée,
- retrait de toutes les séquences d'étapes de procédé (141, 142, 143) qui peuvent également appartenir à d'autres compétences,
- retrait d'états destinés à un traitement d'erreurs de la compétence (111, 112) et
- interconnexion du modèle d'information avec la commande du système.

8. Produit de programme informatique selon la revendication 7, **caractérisé en ce que**
pour la détection des états à représenter (111, ... 143) chaque état doit être commandé et parcouru de manière ciblée au moins une fois.

9. Produit de programme informatique selon la revendication 7 ou 8,
**caractérisé en ce que**
pour la détection des états à représenter (111, ... 143) le système est observé pendant une période au cours de laquelle chaque état a été parcouru au moins une fois.

10. Produit de programme informatique selon l'une quelconque des revendications précédentes 7 à 9,
**caractérisé en ce que**
au moins deux compétences/étapes de production doivent être identifiées au sein du modèle d'état, dans lequel la séquence d'étapes de procédé (141, 142, 143) d'une première compétence qui pourrait également appartenir à d'autres compétences est mise en œuvre par le biais d'une comparaison de concordances dans les graphiques d'état déterminés de la première compétence (12) avec le graphique d'état de séquence déterminé de la seconde compétence (13) et la séquence d'états ainsi déterminée est marquée et éliminée des deux graphiques d'état.

11. Produit de programme informatique selon l'une quelconque des revendications 7 à 10,
**caractérisé en ce que**
l'état initial et l'état final de l'étape de production sont déterminés par le biais d'un parcours ciblé de la compétence et d'une identification des états.

12. Produit de programme informatique selon l'une quelconque des revendications précédentes 7 à 11,
**caractérisé en ce que**
le modèle d'information est formé selon la norme OPC-UA.

13. Dispositif conçu pour la mise en œuvre du procédé avec les caractéristiques selon l'une quelconque des revendications 1 à 6.
